# EUROPEAN PATENT APPLICATION

(11) **EP 4 199 559 A1**
(43) Date of publication of application: **21.06.2023**
(21) Application number: 21306797.8
(22) Date of filing: 16.12.2021
(51) Int. Cl.: H04W 4/90, G06Q 10/04

(54) **COMPUTERIZED DISRUPTION HANDLING IN AN ENVIRONMENT**

(71) Applicant: Amadeus S.A.S., 06410 Biot (FR)
(72) Inventor: BEYNEL, Mathieu, Pegomas (FR); LAMOUREUX, Yann, Biot (FR)
(74) Representative: Samson & Partner Patentanwälte mbB

(57) **Abstract**

A computing system, method, and computer program of disruption handling in an environment are presented. The computing system is configured to receive live data, to process the live data, and to store the processed live data. The system is further configured to calculate a current operating indicator from the live data and to forecast a development of the operating indicator without interaction. The system is even further configured to create real-time alerts in response to determining a deviation of the current operating indicator and/or the forecasted operating indicator. Moreover, the system is configured to simulate a development of the operating indicator for at least one action, to determine at least one possible action, and to trigger an action selected from the determined at least one possible action. Finally, the system is configured to generate action data in response to a triggered action and to store the action data.

## Description

### FIELD OF THE INVENTION

The present invention generally relates to handling disruptions in an environment and, in particular, to a computing system, a computerized method, and a computer program for generating alerts and triggering actions based on detection of events caused by disruptions using current, predicted, and simulated operational indicators.

### BACKGROUND OF THE INVENTION

Most environments, whether they are manufacturing facilities with or without supply chains, supplier interconnections, cellular, Internet, or general data networks, computer architectures, global service providers, national healthcare supply, etc., are sensitive to disruptions that occur within their components and services. Although environments provide means to reduce the risk and impact of disruptions, disruptions cannot be avoided completely but can have a large impact on the whole environment.

The effects of different types of disruptions on environments may also vary to a great extent. In the example of a national cellular network environment, a disruption like a type power outage in an area, in which a data center of a mobile operator is located, may have a larger impact on the connection stability of the overall environment than a snow storm in a larger but less inhabited area. In another example when considering the global travel network, a disruption like a national strike of employees may only have a small impact on the delays or cancelled flights but a volcano eruption in Iceland may lead to lower travel rates and large delays over a longer period. Moreover, not every disruption of the same type will have an identical impact since other parameters have to be considered as well (e.g., locations of data centers as in the example of cellular networks).

Additionally, since a lot of data may be stored siloed in distributed environments and consequently only be accessed by some but not all components, disruptions can often only be responded to locally and to a limited extent. If nevertheless access to a vast amount of data is possible, the information contained in the data monitored is often not sufficient to provide a reliable assessment of the disruption. Hence, it is important to provide an improved disruption handling to alert users, internal components, and/or external systems and to trigger actions.

### SUMMARY OF THE INVENTION

In this context, methods, systems and computer program products are presented as defined by the independent claims.

More specifically, a computing system of disruption handling in an environment is presented. The system comprises an environment data database and an action data database. Moreover, a data processing module is configured to receive live data from the environment, to process the live data, and to store the processed live data in the environment data database. An operating indicator module is configured to calculate a current operating indicator from the live data stored in the environment data database. A prediction engine is configured to forecast a development of the operating indicator without interaction based on historical data stored in the environment data database. An alerting module is configured to create real-time alerts in response to determining a deviation of the current operating indicator and/or the forecasted operating indicator caused by a disruption in the environment. A simulation engine is configured to simulate a development of the operating indicator for at least one action based on historical data stored in the environment data database and action data stored in the action data database. A recommendation engine is configured to determine at least one possible action based on the at least one simulated operating indicator, the forecasted operating indicator and/or the current operating indictor. An action triggering module is configured to trigger an action selected from the determined at least one possible action. And an action reporting module is configured to generate action data in response to a triggered action and to store the action data in the action data database.

Furthermore, a corresponding computerized method providing the aforementioned functionalities is presented.

Moreover, a computer program is presented, the execution of which causes a computer to perform the presented method.

Further refinements are set forth by the dependent claims.

These and other objects, embodiments and advantages will become readily apparent to those skilled in the art from the following detailed description of the embodiments having reference to the attached figures, the invention not being limited to any particular embodiments.

### BRIEF DESCRIPTION OF THE DRAWINGS

The foregoing and further objects, features and advantages of the present subject matter will become apparent from the following description of exemplary embodiments with reference to the accompanying drawings, wherein like numerals are used to represent like elements, in which:
Fig. 1 shows a computing system of disruption handling in connection with an environment.
Fig. 2 presents a detailed overview of the computing system of disruption handling.
Fig. 3 and Fig. 4 depict embodiments of a user interface.
Fig. 5 shows an excerpt of the disruption handling system with an additional database.
Fig. 6 presents connectivity examples to external systems for triggering actions.
Fig. 7 shows an excerpt of the disruption handling system for creating links in databases.
Fig. 8 is a flowchart of the method of disruption handling.
Fig. 9, Fig. 10, and Fig. 11 show flowcharts of embodiments of the method of disruption handling.
Fig. 12 is an overview of a computing system for implementing the method of disruption handling.

### DETAILED DESCRIPTION

The present disclosure relates to a system and method of disruption handling in an environment. Environment is thereby to be understood broadly and can encompass all kinds of environments, e.g., manufacturing facilities with or without supply chains, supplier interconnections, cellular, Internet, or general data networks, computer architectures, global service providers, national healthcare supply, and the like. In particular examples, the environment relates to a global flight network. In other examples, the environment is a national cellular network. However, these examples are not limiting and it will be apparent to the skilled person that the system and method described herein is applicable to any kind of environment.

Disruptions in a global flight network may refer to environmental disruptions, such caused by volcanic eruptions, snow storms, bush fires, diseases, and the like, to human made disruptions, such caused by flight crew strike, travel bans, wars, and the like, to technical disruptions, such as defective aircrafts and the like, or to any other type of disruptions, such as cascading delays from aircraft rotation, missed connected, and the like. Disruptions in a national cellular network may also comprise environmental disruptions, human made disruptions, technical disruptions, and other types of disruptions, which include fires in datacenters, broken connection cables, blackouts, and the like.

Live data captured in an environment can be very divers. The live data may comprise, for example, runtime parameters of the environment, throughput of a network comprised by the environment, workload in sub-sections of the environment, technical measurement data of components of the environment, warning messages, communication data, and such. When considering a global flight network environment, the live data may comprise raw flight data, data relating to passenger communication and/or passenger compensation, e.g., monetary compensation, vouchers, hotels for overnight stay, and the like. In contrast, the live data of a national cellular network environment may comprise data relating to the number of current connections, surveillance data of mobile stations, data captured by mobile operators relating to registered mobile devices, and the like.

If a disruption in the environment occurs, at least part of the live data will reflect the effects of the disruption. Therefore, a computing system of disruption handling, also referred to as disruption handling system, according to the disclosure receives live data from the environment. The live data is not simply stored in the disruption handling system but at least in part processed before storing to only store data required for disruption handling. Processing the live data may comprise at least one of aggregating live data from different sources, correlating different kinds of live data, extracting meaningful parts of the live data, and deleting irrelevant parts of the live data. Processing of the live data before storing the live data significantly reduces the required space to store the live data and accelerates the disruption handling.

The disruption handling system calculates at least one current operating indicator based on the captured and processed live data. Operating indicators are specific to the environment and may be key performance indicators (KPI) as well as technical indicators relating to parameters of the system. For example, operating indicators of a global flight network environment may comprise no show rate at the gate of passengers, acknowledgement rate to re-accommodation offers from passengers, average compensation cost per disrupted passenger, number of misconnections, number of delayed flights, averaged delay time, number of passengers travelling impacted by a disruption, and such. In the example of a national cellular network environment, operating indicators may comprise number of disconnected calls, number of data transfer interruptions, number of customer support requests, percentage of data or voice service, and the like.

Moreover, the disruption handling system also forecasts the development of the at least one operating indicator based on stored historical data. Stored historical data allows to predict how an operating indicator will evolve when no action is performed to improve the situation caused by the disruption. In some embodiments, forecasting is not only based on historical data but also on cross domain awareness, i.e., the awareness of dependencies between operating indicators. For example, in the flight network embodiment, the acknowledgment rate to re-accommodation offers from passengers may be related with the no show rate at the gate of passengers as passengers that have not acknowledged the rebooking will likely not come to the gate in time.

If the current operating indicator and/or the forecasted operating indicator deviate from a normal or desired pattern, the disruption handling system creates real-time alerts. Normal or desired patterns may be defined by a user, e.g., a surveillance agent, a technical expert, a security person, or the like, with deviation scenario indicators and/or may be determined by the disruption handling system. For example, the disruption handling system may define a confidence interval based on the historical data as normal pattern. For example, the normal pattern may be the usual or averaged value of the operating indicator on a day of the year or a given day of the week. Additionally or alternatively, the user may set one or more threshold values for an operating indicator. Moreover, a user interface according to an embodiment may visualize traffic light zones if two thresholds are set, e.g., a green zone for normal or desired values of the operating indicator, a yellow zone if the first threshold is exceeded and a red zone if the second threshold is exceeded.

The alerts may be presented to a user, e.g., a surveillance agent, a technical expert, a security person, or the like, and may be presented in a user interface, e.g., the same or a different user interface, which is used to set the normal or desired patterns as described above, sent as message (per email or SMS, via an instant messenger or any other suitable transmission format), and/or cause an alarm on a mobile device. Creating real-time alerts not only on the current operating indicator but also on the forecasted operating indicators allows an earlier reaction to the deviation. For example, the current operating indicator may still be below a threshold that defines the maximum allowed value but the forecast shows that the operating indicator will likely exceed the threshold if no action is taken shortly. In such a situation, the real-time alert will not be created if only the current operating indicator is considered but will be created if the forecasted operating indicator is considered and allows a faster reaction. Additionally, two different real-time alerts may be created, one if the first threshold is exceeded and another one if the second threshold is exceeded.

Moreover, the disruption handling system does not only forecast the development of the operating indicator if no action is taken but also simulates a development of the operating indicators for different actions or combination of actions taken to optimize the disruption handling. The simulation is based on historical data and corresponding action data and may also be based on a list of possible actions that are to be simulated. Which actions are to be simulated in response to which alerts may be defined by specific rules stored in a database. The rules may be set by a user similar to setting the normal or desired patterns as described above or determined by the disruption handling system based on historical data and corresponding action data.

Simulation of the operating indicator for different scenarios enables the disruption handling system to recommend actions that improve the disruption handling and that is likely to bring the operating indicator into a normal pattern. The disruption handling system may in some embodiments provide a ranked list of recommended actions with the expected impact on the operating indicator to a user via a user interface. The disruption handling system is then able to trigger selected actions from the recommended actions. This triggering may be based on a user selection of recommended actions in the user interface or automatized, i.e., the disruption handling system may select an action from the recommended actions and automatically trigger this selected action. Preferably, automatically triggering the action(s) directly follows the creation of the corresponding alerts. Thereby, a time optimized disruption handling is achieved as the delay time in reacting is reduced.

For example, if the disruption handling system of the global flight network environment detects that the operating indicator "acknowledgement of rebooking", which may be, e.g., a rebooking following a notification sent by email or SMS or the like, is below an expected threshold at the time before departure, the disruption system may simulate the development of the operating indicator for the following three actions: send follow-up SMS to passengers, trigger outbound call to passenger from call center, or send agent to the gate to enable assisted rebooking. The user may be presented with a ranked list of these three actions, e.g., (1) SMS, (2) outbound call, (3) agent. The user may select an educated corrective action based on the rating and a shown impact of the action on the operating threshold. The disruption handling system then triggers this action, e.g., triggers an external passenger communication platform to send an SMS to the passengers that have not yet acknowledged the rebooking.

The selected and triggered action is reported and stored as action data. This feedback loop enables the disruption handling system to differentiate natural/normal trends of the live data (or historical data) from trends that are influenced by actions taken. Hence, the disruption system is able to learn from actions taken and continuously improves the simulation and recommendations.

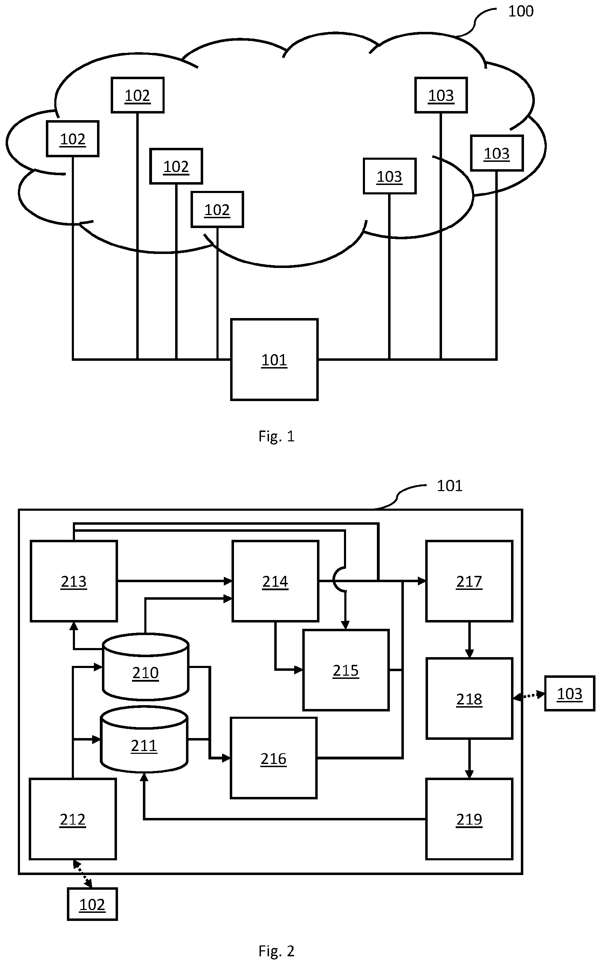

Now turning to Fig. 1 that shows a computing system of disruption handling 101 in connection with an environment 100. The environment 100, e.g., a manufacturing facility with or without supply chains, a cellular network, a computer architecture, a global flight network, a national healthcare supplier, and the like, comprises a plurality of components that are responsible for operation of the environment. For example, exemplary components of a global flight network environment are the aircrafts, the routes, the airports, the available personnel, various databases that store information about the flights on route, scheduled flights, cancelled flights etc., various servers and computer platforms that enable communication to the customers, to the airports, and/or to other agencies, and many more. As another example, components of a national cellular network environment may comprise mobile stations, data centers, servers and platforms required to run the background work and organize the connections, computing systems of mobile providers, and much more.

The disruption handling system 101 is at least connected to two different kinds of components of the environment, namely components that provide live data, denoted as live data component 102, and components that can perform actions relates to the environment, denoted as action component 103. The connection may be via a wide area network, global network, the Internet or similar network, a public or a private network, and/or via multiple interconnected networks as known by the skilled person. The disruption handling system 101 may use a dedicated interface to communicate with the live data components 102 and/or with the action components 103. Additionally or alternatively, the disruption handling system may also communicate with the components 102, 103 via a standard interface, via sending messages over communication systems or via any other suitable method.

The disruption handling system 101 may be a single computer or server but may also consists of a plurality of interconnected servers or computers (not shown). The disruption handling system 101 may include a processor, a memory, a mass storage memory device, an input/output (I/O) interface, and a Human Machine Interface (HMI). The disruption handling system 101 may also be operatively coupled to one or more external resources via a network or I/O interface. External resources may include, but are not limited to, servers, databases, mass storage devices, peripheral devices, cloud-based network services, or any other suitable computer resource that may be useful for the operation of the disruption handling system 101.

The disruption handling system 101 comprises a plurality of modules that fulfil different tasks described herein. The modules may be located in a single system but may also be distributed among a plurality of computing resources, e.g., over a plurality of servers. Such modules comprised by the disruption handling system 101 are shown in greater detail in Fig. 2.

The disruption handling system 101 at least comprises two databases, e.g., an environment data database 210 and an action data database 211, a data processing module 212, an operating indicator module 213, a prediction engine 214, an alerting module 215, a simulation engine 216, a recommendation engine 217, an action triggering module 218, and an action reporting module 219.

The data processing module 212 receives live data from the environment 100. The live data may comprise, for example, runtime parameters of the environment, throughput of a network comprised by the environment, workload in sub-sections of the environment, technical measurement data of components of the environment, warning messages, communication data, and such. The live data is usually received from at least one of the live data components 102. The live data is then processed by the data processing module 212. Processing the live data may comprise at least one of aggregating live data from different live data components 102, correlating different kinds of live data, extracting meaningful parts of the live data, and deleting/ignoring irrelevant parts of the live data. Processing of the live data before storing the live data significantly reduces the required space to store the live data and accelerates the disruption handling.

The data processing module 212 may apply a machine learning model to perform the processing of the data. The machine learning model may be a supervised or semi-supervised model. It may be one of a gradient boosted tree, a random forest, and artificial neural network, a recurrent neural network, a convolutional neural network, an autoencoder, a deep learning architecture, a support vector machine, a data-driven trainable regression model, a k-nearest-neighbor classifier, a physical model and/or a decision tree or a combination thereof. The machine learning model may be trained on the received live data and may also be updated regularly, e.g., every day, week, or month, by restarting the training including newly live data.

After having processed the live data, the data processing module 212 stores the processed live data in the environment data database 210. The environment data database 210 may be a relational database system, non-relational database system or a mix of those database systems. In some embodiments, a database, which may be the environment data database 210 but also any other database, may also store the raw data to determine which raw data is relevant and which aggregation should be applied to arrive at the processed live data. This may be particularly relevant in the tuning phase of the machine learning model.

The operating indicator module 213 further calculates a current operating indicator from the live data stored in the environment data database 210. Operating indicators are specific to the environment 100 and may be key performance indicators (KPI) as well as technical indicators relating to parameters of the environment 100. The formulas for the operating indicators may be stored in a local storage of the operating indicator module 213 or in a separate database connected to the operating indicator module 213. By aggregating a plurality of different live data retrieved from different live data components 102, operating indicators can not only be calculated based on siloed data that is only accessible to some components of the environment 100 but based on a larger set of data. This gives a more complete view of the environment 100 and the impacts of disruptions so that the disruption handling can be optimized.

The prediction engine 214 forecasts a development of the current operating indicator without interaction based on historical data, i.e., previous live data, stored in the environment data database 210. Forecasting may not only be based on the historical data but also on an awareness of dependencies between different operating indicators.

The alerting module 215 creates real-time alerts in response to determining a deviation of the current operating indicator and/or the forecasted operating indicator caused by a disruption in the environment 100. The alerts may be sent to user interfaces to inform users, e.g., surveillance agents, technical experts, security persons, or the like, about deviations. The alerts may automatically trigger a simulation of a development of the operating indicator for at least one action. Additionally or alternatively, the user may trigger the simulation, e.g., by clicking a "simulate" button in the user interface or sending a response message.

Simulation is done by the simulation engine 216, which simulates a development of the operating indicator for at least one action based on historical data stored in the environment data database 210 and action data stored in the action data database 211. Action data comprises data received from the action reporting module 219 in response to triggered actions. The action data may comprise, e.g., a date and time of the action and details of the action. In the flight network example, if the action is sending an SMS to all passengers having not acknowledged the rebooking offer via email, at least the date and time of sending the SMS and references to passengers receiving the SMS, e.g., tracking data, booking numbers, etc., may be recorded as action data. Via the date and time of the action, a dependency of the historical data from the action may be determined. Other suitable methods of creating links between the action data and the historical data may also be used. In other embodiments, part of the action data or the historical data may also be stored together in the environment data database 210 and/or the action data database 211. Although which action data can be captured is limited to the specific action taken, it is preferred that enough information is recorded as raw data to capture further action data that may be used to monitor the reaction of the environment and the operating indicators to the action taken. Moreover, the data processing module 212 may also enrich the live data to be stored or already stored live data, i.e., historical data, and/or the action data so that a dependency of the historical data and the action data may be determined.

Based on the at least one simulated operating indicator, the forecasted operating indicator and/or the current operating indictor, the recommendation engine 217 determines at least one possible action. Possible actions are those actions for which the simulation has shown that they are likely to bring the operating indicator back to a normal or desired pattern. As there may be more than one action that is a possible action, the actions may be ranked based on the simulated development of the operating indicator.

The recommendation engine 217 may apply a machine learning model to determine the ranking. The machine learning model may be a supervised or semi-supervised model. It may be one of a gradient boosted tree, a random forest, and artificial neural network, a recurrent neural network, a convolutional neural network, an autoencoder, a deep learning architecture, a support vector machine, a data-driven trainable regression model, a k-nearest-neighbor classifier, a physical model and/or a decision tree or a combination thereof. The machine learning model may be trained on historical data and/or action data and may also be updated regularly, e.g. every day, week, or month, by restarting the training including newly stored data in the environment data database and the action data database.

The action triggering module 218 triggers the action that is selected from the determined at least one possible action. Therefore, the action triggering module 218 is connected with the action components 103. The action triggering module 218 communicates with the action components 103, which may be external components comprised by or related to the environment 100 as shown in Fig. 1 but also independent external components for general use such as email or messaging servers.

The action triggering module 218 may then send a request or a message through a dedicated interface to at least one of the action components 103 to trigger the action. Alternatively, the action triggering module 218 may communicate with at least one of the action components 103 via a standardized interface to trigger the action. For example, if the disruption handling system 101 is used for handling of disruptions in a global flight network environment, the triggered action may be to display and announce warning messages at the airport. Therefore, the disruption handling system 101 connects to an airport communication solution, which corresponds to an action component 103, via a dedicated interface through which the disruption handling system 101 sends a request to display and announce such messages. In another example, if the general the peak of passengers running through security at a specific airport affected by the disruption is 1-3 pm. Due to weather forecasts received from an external event database, which corresponds to a live data component 102, a global delay is likely to happen and peak of traffic is now expected 3-5 pm. Hence, the action triggering module 218 will communicate with a staffing system, which corresponds to an action component 103, to re-allocate the work force.

When the action has been triggered, the action reporting module 219 generates action data and stores the action data in the action data database 211. This feedback loop enables the disruption handling system 101 to differentiate natural trends of the live data (or historical data) from trends that are influenced by actions taken. Hence, the disruption system 101 is able to learn from actions taken and continuously improves the simulation and recommendations.

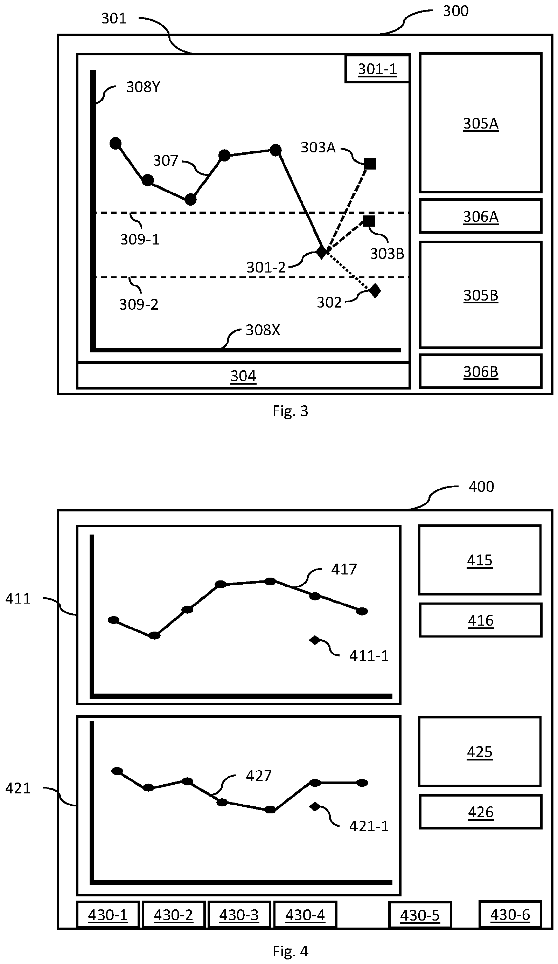

Fig. 3 shows an example of a user interface 300 that may be connected with the disruption handling system 101. The exemplary user interface 300 visualizes the operating indicator in region 301. The current operating indicator is visualized on two positions 301-1 and 301-2. The user interface 300 presents a value 301-1 of the operating indicator, e.g., "40%", and a rhombus 301-2 in a graphical representation, e.g., a chart. The user interface 300 also shows the forecasted development of the operating indicator with another rhombus 302.

Moreover, the exemplary user interface also presents two simulated developments of the operating indicator with squares 303A and 303B for taking action A or action B respectively. As will be apparent to the person skilled in the art, the example is not limiting. The user interface 300 may also only visualize either the current operating indicator, the forecasted development of the operating indicator, or a simulated development of the operating indicator at a time. For example, the user may switch to different versions of the user interface 300, wherein each version may only show a subset of the current operating indicator, the forecasted development of the operating indicator, and the at least one simulated development of the operating indicator.

The exemplary user interface 300 visualizes the real-time alerts in a bottom line 304. The alert may be a sentence, e.g., "Number of successful cellular connections is below 50%", a colored warning, e.g. red colored "Connections low!", or any other kind of alert. Additionally or alternatively, the alerts may be an audio alarm signal or a vibration. The user interface 300 may also visualize the thresholds or allowed rates of increase or decrease of the operating indicators (not shown), either in the region 301, in the bottom line 304, or at any other suitable place. The user interface 300 may also support graphical setting of thresholds of operating indicators by moving the cursor and clicking at a desired value (in y-direction) in the region 301.

The user interface 300 also displays a description of a determined first possible action in box 305A and of a determined second possible action in box 305B. The forecasted operating indicator 303A corresponds to the action in box 305A and the forecasted operating indicator 303B corresponds to the action in box 305B. Below each description of a possible action, a selectable button for the possible action is shown. Hence, the selectable button 306A corresponds to the action 305A and the selectable button 306B to the action 305B.

When the user clicks any of the buttons 306A, 306B, the selected action is sent from the user interface 300 to the action triggering module 218. The action triggering module 218 then triggers the selected action as described above.

The chart comprised by the operating indicator region 301 comprises a historical development 307 (depicted with circles) of the operating indicator determined based on the historical data stored in the environment data database 210. The chart further comprises an x-axis 308X and a y-axis 308Y. The x-axis 308X may relate to minutes, hours, days, months or any other suitable time scale. For example, when the rhombus 301-2 is the current operating indicator, the circles to the left may be the operating indicators of the previous hours and the rhombus 302 and the squares 303A, 303B may be forecasted/simulated operating indicators of the next hour. The y-axis 308Y may accordingly relate to the value of the operating indicators, e.g., in percent, relative, absolute, or the like.

The user interface 300 may also highlight the thresholds in the region 301. In this example, two different thresholds may have been set by the user or the disruption handling system 101, one for a slight deviation of the operating indicator and one for a massive deviation of the operating indicator. Two lines, depicted as horizontal dashed lines 309-1 and 309-2, at the respective threshold values indicate visually when the operating indicator falls below the thresholds. Additionally or alternatively, the region 301 may be subdivided in different colors, e.g., in the form of traffic light colors, depending on the thresholds. So may the part above the line 309-1 be colored in green as the operating indicator is acceptable and shows a desired pattern. The part between the lines 309-1 and 309-2 may then be colored in yellow to show a slight deviation of the operating indicator. The part below the line 309-2 may finally be colored in red as the operating indicators deviates there to a great extent. Of course, the lines 309-1 and 309- may not only be straight horizontal lines but may also have any shape, e.g., corresponding to a threshold varying for each day, time, period depicted on the x-axis 308X.

Fig. 4 shows another example of the user interface 400, in which two operating indicators are shown simultaneously. The user interface 400 may be just another view (e.g., selectable by the user) of the user interface 300 or a separate instance of the user interface. In this embodiment, the user interface 400 comprises two operating indicators regions, one first region 411 of a first operating indicator and a second region 421 of a second operating indicator. Each of the regions 411, 421 comprises a chart of the respective operating indicator. A rhombus in each region 411, 421 depicts the respective current value of the operating indicator 411-1, 421-1. In this example, the charts comprise averaged developments 417, 427 of the operating indicators, e.g., over the last weeks, and each circle of the developments 417, 427 stands for the averaged value of the respective operating indicators on one day of the week.

Although the user interface 400 does not visualize the forecasted or simulated operating indicators, it also displays a description of a determined possible action to improve the first operating indicator towards the targeted trend in box 415 and of a determined possible action for the second operating indicator in box 425. In this example, only the best action is proposed to the user. However, in other examples, the user interface 400 may present all possible actions or a selectable button to display more possible actions (not shown). Below each description of a possible action, a selectable button 416, 426 for the possible action is shown.

The user interface 400 also comprises a plurality of clickable tabs or buttons 430-1, ..., 430-6. Each of the buttons 430-1 to 430-4 may be related to a different operating indicator. For example, let assume that tab 430-1 corresponds to the first operating indicator shown in region 411 and tab 430-2 corresponds to the second operating indicator shown in region 412. If the user now clicks on tab 430-3, which may correspond to a third operating indicator, information relating to the third operating indicator may then be shown in region 411 instead of the information relating to the first operating indicator. If the user afterwards clicks on tab 430-4, which may correspond to a fourth operating indicator, information relating to the fourth operating indicator may then be shown in region 412 instead of the information relating to the second operating indicator. Hence, the user may individually adjust the view as required. Of course, user interfaces with more than two regions are also possible.

The real-time alerts created by the disruption handling system 101 may in this example be presented as traffic light colors on the respective buttons/tabs 430-1 to 430-4. For example, the tab 430-1 may be colored in red (depicting a massive deviation from the desired pattern), the tab 430-2 in yellow (depicting a slight deviation from the desired pattern= and the tabs 430-3 and 430-4 in green if assumed that the respective third and fourth operating indicator shows a normal or desired pattern.

Tabs 430-5 and 430-6 may serve additional purposes. For example, clicking on the tab 430-5 may open another view, in which the user may set or change deviation scenario indicators, e.g., thresholds, allowed rates of increase or decrease, etc., that define normal or desired pattern of the operating indicators, which are then used by the alerting module 215 to determine the deviation of an operating indicators by comparing the current operating indicator and/or the forecasted operating indicator with at least one of the deviation scenario indicators. Additionally or alternatively, clicking on the tab 430-6 may change the view of user interface 400 to the view of user interface 300. In embodiments, other or additional tabs/buttons may be present. For example, there may be a tab that allows zooming from a global to a national view of a network and to a component view. In the example of the flight network, the zoom starting from the global view may lead to an airport view and then finally present a flight level view if required. Each level can be given specific operating indicators. which may be monitored on the user interface 400. Navigating back and forth through the three levels may cause operating indicators, e.g., the KPIs, to be re-calculated as the operating indicators may differ between the levels.

The user interfaces 300, 400 may also present a view of at least part of the environment, e.g., a graph depicting a network of the environment, a map of the world or nation relevant for handling the disruptions, in which the disruptions are highlighted, an overview, e.g. tables, charts, etc., on all operating indicators, and the like. Any views, options, buttons, tabs, and the like described with respect to Fig. 3 and Fig. 4 can be combined within one user interface or omitted as the person skilled in the art will understand.

Another possible representation of the operating indicator in a user interface may be to show the current operating indicator value over a reference curve representing an averaged corresponding historical evolution. The reference curve may be used to define the alert thresholds as a deviation thereof. As will be understood by the person skilled in the art, thresholds are not always flat or constant. For instance, a 15 minutes delay in the airline network environment example may be quite common for a morning flight at peak time but not acceptable in the middle of the afternoon. Therefore, a threshold defined as a percentage of deviation over a reference curve may also be applied.

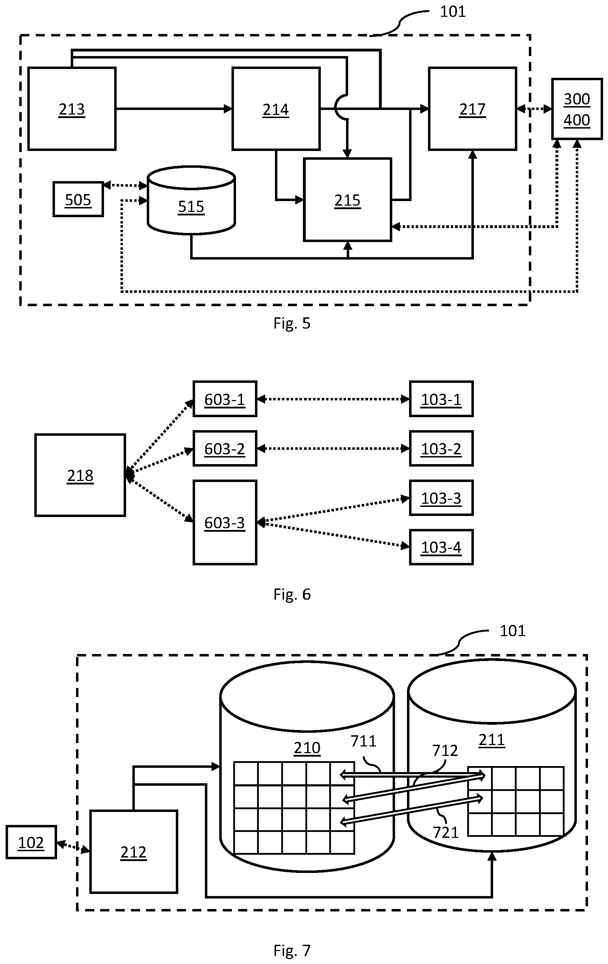

The disruption handling system 101 may also be extended with further components. Fig. 5 shows an excerpt of the disruption handling system 101 with an additional database, i.e., a rule database 515. Although Fig. 5 only shows the operating indicator module 213, the prediction engine 214, the alerting module 215, and the recommendation engine 217, the other components, i.e., the environment data database 210, the action data database 211, the data processing module 212, the simulation engine 216, the action triggering module 218, and the action reporting module 219 are also present in the disruption handling system 101 (but not shown - this is indicated by the dashed line).

In this example, the rule database 515 is configured to store deviation scenario indicators, which are used by the alerting module 215 to determine the deviation by comparing the current operating indicator and/or the forecasted operating indicator with at least one of the deviation scenario indicators.

The deviation scenario indicators define normal patterns and/or desired patterns of the operating indicators and may be absolute thresholds, relative thresholds, allowed rates of increase and/or decrease, and the like. At least some of the deviation scenario indicators may be determined by a deviation scenario module 505 included in the disruption handling system 101. Although shown in Fig. 5 as separate module of the disruption handling system 101, the deviation scenario module 505 may also be a part of another components of the disruption handling system 101, e.g., of the data processing module 212, the operating indicator module 213, the prediction engine 214, or the alerting module 215. Alternatively (not shown), the deviation scenario module 505 may also be an external system that is connected via a network with the rule database 515.

The deviation scenario module 505 may also have access to the environment data database 210 and/or the action data database 211 (not shown) in order to determine a normal pattern, e.g., an evolution of the operating indicator that is to be expected and/or that has the highest likelihood to happen. Therefore, the deviation scenario module 505 may define a confidence interval based on averaged historical data as normal pattern. This leads to determining two thresholds, an upper and a lower threshold and, if the operating indicators exceeds or falls below the respective threshold, a real-time alert will be created as described herein. The deviation scenario module 505 may apply a machine learning model to determine the normal pattern. The machine learning model may be a supervised or semi-supervised model. It may be one of a gradient boosted tree, a random forest, and artificial neural network, a recurrent neural network, a convolutional neural network, an autoencoder, a deep learning architecture, a support vector machine, a data-driven trainable regression model, a k-nearest-neighbor classifier, a physical model and/or a decision tree or a combination thereof.. The machine learning model may be trained on historical data and/or action data and may also be updated regularly, e.g., every day, week, or month, by restarting the training including newly stored live data.

Additionally or alternatively, at least part of the deviation scenario indicators may be set by the user, for example, via a user interface 300, 400 or via other suitable methods known in the art. The user may therefore set one or more threshold values or only allow specific increase or decrease rates for an operating indicator. Individually setting the deviation scenario indicators lead to a more flexible disruption handling system 101, since the user may include further knowledge of the operating indicators or take future plannable disruptions into account.

As described above, the connection to external components, such as the action components 103, may require different interfaces, e.g., application programming interfaces (API) or application binary interfaces (ABI), to enable the triggering of actions, which is shown in Fig. 6. The embodiment of Fig. 6 shows the action triggering module 218 of the disruption handling system 101 in connection with four action components 103-1, 103-2, 103-3, and 103-4. In this example, the action components 103-1 and 103-2 may require the action triggering module 218 to use respective dedicated interfaces 603-1 and 603-2 to communicate with them and to trigger any actions. The action components 103-3 and 103-4 may require a common and/or standardized interface 603-3 to be used. Hence, the action triggering module 218 connects via three different interfaces 603-1, 603-2, 603-3 to action components 103 for action triggering.

Of course, the action triggering module may use more or less interfaces as required. Additionally, other components of the disruption handling system 101 may also connect via these or corresponding interfaces to external components such as the action components 103 as well as the live data components 102.

For forecasting and/or simulating the development of the operating indicator, it is advantageous to store indications in the databases 210, 211 which historical data is influenced by which actions or not influenced at all to make sure that the historical data taken for forecasting is not corrupted by an action. Hence, Fig. 7 shows an excerpt of the disruption handling system 101 for creating such links in the environment data database 210 and the action data database 211. Although Fig. 7 only shows the data processing module 212, the environment data database 210, and the action data database 211, other modules described herein may also be present (but not shown - this is indicated by the dashed line).

The data processing module 212 receives or retrieves the live data from live data components 102. In this example, stored records are depicted by a line in each of the tables comprised by the environment data database 210 and action data database 211. For example, the records, i.e., lines of the depicted table, of the environment data database 210 may each correspond to a set of live data received from the live data components 102 and processed by the data processing module 212. The records, i.e., lines of the depicted table, of the action data database 211 may each correspond to a set of action data created in response to a triggered action.

The data processing module 212 determines whether there has been an action reported and stored recently in the action data database 211. If there is such a record, the data processing module 212 creates a link between the respective record in the action data database 211 and the influenced records of the live data created in the environment data database 210. In the embodiment of Fig. 7, the first record of action data database 211 is an action that influences the first two records of the environment data database 210, and the second record of action data database 211 influences the third record of the environment data database 210. The example of Fig. 7 is very simplified and the skilled person will recognize that a record of an action may influence more than only two records of live data and that also two or more actions may influence one single record.

The data processing module 212 may apply a suitable algorithm to determine whether an action influences the live data. In a particular embodiment, the data processing module 212 may apply a machine learning model to determine the dependency of the live data from action data. The machine learning model may be a supervised or semi-supervised model. It may be one of a gradient boosted tree, a random forest, and artificial neural network, a recurrent neural network, a convolutional neural network, an autoencoder, a deep learning architecture, a support vector machine, a data-driven trainable regression model, a k-nearest-neighbor classifier, a physical model and/or a decision tree or a combination thereof.. The machine learning model may be trained on historical data and/or action data and may also be updated regularly, e.g., every day, week, or month, by restarting the training including newly stored live data and action data.

When the data processing module 212 determines a dependency between the action data and the live data, it creates a link between the records in the environment data database 210 and the action data database 211, which is depicted by the double arrows 711, 712, 721. Therefore, an additional information field may be included in the data records of the environment data database 210 and/or the action data database 211 that comprises a link to the dependent other data records. The link may be a unique identifier, a key, or the like to the dependent record in the other database. Other suitable methods for linking the data records may be applied as well.

In embodiments, the forecasted development of the operating indicator, i.e., without taking an action, may also be stored in a database comprised by the disruption handling system 101 before taking an action. This may help to identify the deviation due to the action taken and to create the links. Storing the forecasted development of the operating indicator may also be used to display the forecasted development versus the actual development due to the action in the user interface 300, 400. Moreover, storing the forecasted development of the operating indicator may also help to improve the forecasting liability since the forecasted development can thereby be compared to the actual development.

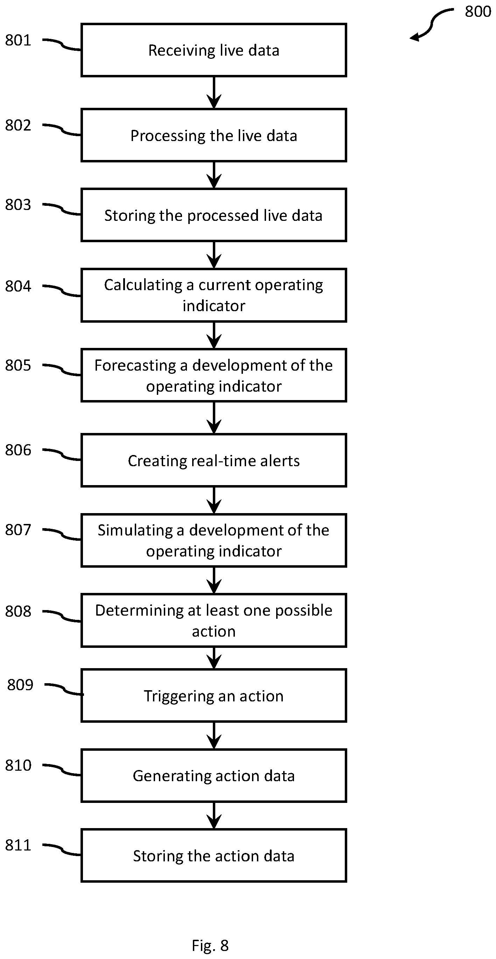

Fig. 8 is a flowchart of the method 800 of disruption handling according to the disclosure. The flowchart starts in 801 with receiving live data from an environment, such as the environment 100. The live data may be received from live data components 102 as described above. Moreover, the live data may be received by a module of a disruption handling system, e.g., the data processing module 212 as described herein. Afterwards the live data is processed in 802, for example, by the data processing module 212. Processing the live data may comprise at least one of aggregating live data from different sources, correlating different kinds of live data, extracting meaningful parts of the live data, and deleting irrelevant parts of the live data. The live data may also be stored temporarily before processing to be able to reprocess the data if errors occur or if the processing of the live data is required to be improved.

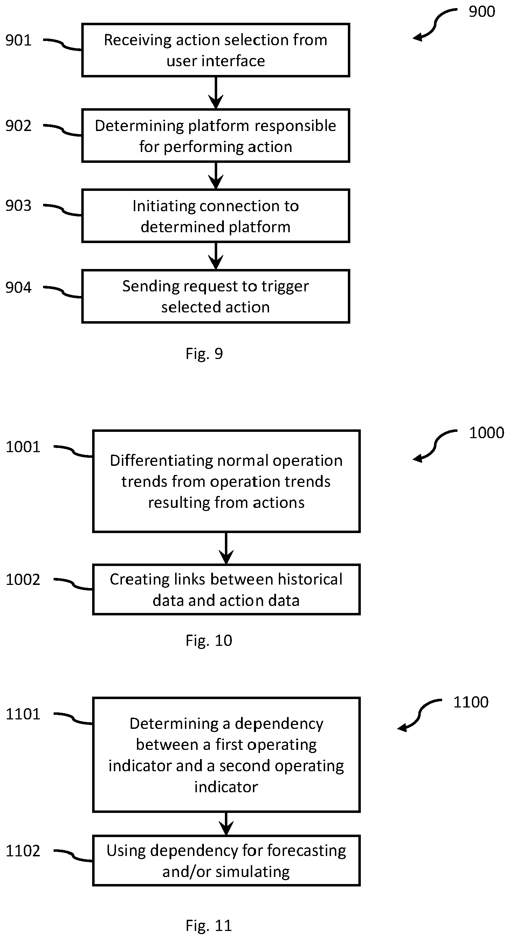

After processing the live data, the processed live data is stored in 803 in a database, e.g., the environment data database 210. The stored live data is also denoted as historical data. Processing the live data before storing the live data significantly reduces the required space to store the live data and accelerates the disruption handling. For example, processing the live data may also comprise differentiating normal operating trends from operating trends resulting from actions and creating links between historical data and action data, which is described in greater detail with respect to Fig. 10.

The method proceeds in 804 with calculating a current operating indicator based on the live data, which may be the data stored recently in the environment database 210. This calculation may be performed by the operating indicator module 213 as described above. The formulas for calculating the operating indicators may be set by a user, e.g., a surveillance agent, a technical expert, a security person, or the like, via a user interface, such as the user interfaces 300, 400.

In 805, also a development of the operating indicator is forecasted. Forecasting means predicting an evolution of the operating indicators based on historical data stored, e.g., in the environment data database 210. Forecasting may comprise short time predictions, e.g., seconds, minutes, an hour, or a day, and long time predictions, e.g., a day, a week, or even longer, and may be performed by a dedicated module of the disruption handling system 101, such as the prediction engine 214. Forecasting may also comprise considering different contexts in the past that may influence each other or interact to have a greater impact on the development of the operating indicator, e.g. bad weather forecast and engine damage.

In 806, real-time alerts are created in response to determining a deviation of the current operating indicator and/or the forecasted operating indicator caused by a disruption in the environment 100. Disruptions may be environmental disruptions, human made disruptions and/or technical disruptions. For example, disruptions in, e.g., in a global flight network may refer to environmental disruptions, such caused by volcanic eruptions, snow storms, bush fires, diseases, and the like, to human made disruptions, such caused by flight crew strike, travel bans, wars, delayed passengers, and the like, or to technical disruptions, such as defective aircrafts and the like. Disruptions in, e.g., a national cellular network may also comprise environmental disruptions, human made disruptions, and technical disruptions, which include fires in datacenters, broken connection cables, blackouts, and the like.

The real-alerts, which may be created by the alerting module 215 as described above, may be presented to a user, e.g., a surveillance agent, a technical expert, a security person, or the like, and may be presented in a user interface, such as the user interfaces 300, 400, sent as message (per email or SMS, via an instant messenger or any other suitable transmission format) and/or cause an alarm on a mobile device, in a facility, or the like. Creating real-time alerts not only on the current operating indicator but also on the forecasted operating indicators allows an earlier reaction to the deviation. For example, the current operating indicator may still be below a threshold that defines the maximum allowed value but the forecast shows that the operating indicator will likely exceed the threshold. In such a situation, the real-time alert will not be created if only the current operating indicator is considered but will be created if the forecasted operating indicator is considered and allows a faster reaction.

To further improve the disruption handling, a development of the operating indicator for at least one action, which may be triggered in order to bring the operating indicator to a normal or desired pattern, is simulated in 807. This simulation, which may be performed by the simulation engine 216, is based on historical data and action data stored in databases, e.g., in the environment data database 210 and in the action data database 211. Simulation models may be predefined per operating indicator, set by users on the fly, or even determined by the help of machine learning models. Preferably, simulation of an operating indicator will only be performed when a deviation of the current or forecasted operating indicator is detected. Simulating the development of the operating indictor for at least one action may comprise two sub-actions: listing possible actions that are relevant for the given context, e.g., for the specific deviation of the respective operating indicators, and that yielded the expected result in the past and simulating the development for each of these actions.

In 808, at least one possible action is determined, e.g., by the previously described recommendation engine 217, based on the at least one simulated operating indicator, the forecasted operating indicator and/or the current operating indictor. This determined action is used to recommend possible actions to a user via a user interface, e.g., the user interface 300, 400 as described above. The possible actions may be ranked and provided to the user in a ranked list of recommended actions. Also, the expected impact on the operating indicator of the possible actions may be presented to the user. The user may then select an action from the recommended actions. Alternatively, only the best action may be determined, i.e., the action that has the most impact on the operating indicator and will most likely bring the operating indicator to a normal or desired pattern. In this example, the disruption handling system 101 may select the best action to trigger.

After selecting an action, either automatically through the disruption handling system or by the user though a user interface, the action selected from the determined at least one possible action is triggered in 809, e.g., by the action triggering module 218 as described above. Therefore, a request, message, or the like is sent to an external platform, e.g., the action component 103, informing the platform to perform the desired action.

In embodiments, the simulated development(s) of the operating indicator may also be stored in a database comprised by the disruption handling system 101 before triggering the action. This may help to improve the simulating liability since the simulated development can be compared to the actual development in response to the action.

When the action has been triggered and, in some embodiments also completed, action data is generated in 810 by the disruption handling system 101, for example, by the aforementioned action reporting module 219. In some embodiments, the action components may report fulfillment and/or other details about the triggered action back to the disruption handling system 101, e.g., to the action triggering module 218 or the action reporting module 219. The action data may therefore comprise, e.g., a date and time of the action and details of the action. In a flight network example, if the action is sending an SMS to all passengers having not acknowledged the rebooking, at least the date and time of sending the SMS and references to passengers receiving the SMS, e.g., tracking data, booking numbers, etc., which may be reported back from the action component 102, may be recorded as action data.

The flowchart ends in 811 with storing the action data in the action data database 211. The stored action data may then be used by different components of the disruption handling system 101 as described above, e.g., by the simulation engine 216.

Fig. 9, Fig. 10, and Fig. 11 show further flowcharts of embodiments of the method of disruption handling.

The flowchart 900 of Fig. 9 depicts how the method 800 processed after a user has selected a possible action in a user interface, e.g., in one of the user interfaces 300, 400. The user interface sends this selection to the disruption handling system 101, e.g., to the action triggering module 218, which then receives the action selection from the user interface in 901. In order to trigger the selected action, the platform is determined in 902, which is responsible for performing the action. To this platform, which may be one of the action components 103, a connection is initiated in 903, which may be done through a dedicated or common interface as described above. Then, a request, message, or the like is sent to this platform to trigger the selected action.

The flowchart 1000 of Fig. 10 depicts an embodiment of the method 800, in which, when processing the live data or at other predetermined points of time, normal operation trends of the live data or (later denoted as) historical data are differentiated in 1001 from operation trends in the live data or historical data resulting from actions. This differentiation, which may be performed by the data processing module 212 when retrieving/receiving the live data, can be achieved since action data is stored in the action data. In some embodiments, a machine learning model is applied to differentiate the trends. The machine learning model may be a supervised or semi-supervised model. It may be one of a gradient boosted tree, a random forest, and artificial neural network, a recurrent neural network, a convolutional neural network, an autoencoder, a deep learning architecture, a support vector machine, a data-driven trainable regression model, a k-nearest-neighbor classifier, a physical model and/or a decision tree or a combination thereof. The machine learning model may be trained on historical data and action data and may also be updated regularly, e.g., every day, week, or month, by restarting the training including newly stored data in the environment data database and the action data database.

In some embodiments, at least part of the live data may relate to data that reflects action data. For instance, if a deep link is sent to users in a SMS which leads the users to a rebooking page, the usage of this link means that the user has viewed the SMS. The link is not disclosed in any other context. The data processing module 212 is aware of the actions taken and therefore aware of the reactions to look for. This approach may also help in the trend differentiation. The operating indicator may further be calculated from raw data that include additional details on the context, in which the indicator is calculated. After having differentiated the trends, links are created in 1002 between the historical data and the action data, for example, as described with respect to Fig. 7. The additional details mentioned above may be correlation keys to capture the action data and to create the links.

Fig. 11 shows a flowchart 1100 of another embodiment of the method 800, in which a dependency between a first operating indicator and a second operating indicator is determined in 1101. In some cases, a dependency may only exist for actions taken. For example, in the flight network embodiment, the response rate to re-accommodation offers from passengers may be related with the no show rate at the gate of passengers as passengers that have not acknowledged the rebooking will likely not come to the gate in time. Hence, determining such a dependency helps to simulate or forecast a development of these operating indicators, which is shown in 1102.

In another embodiment, a computer program product comprising instructions is provided. These instructions, when the program is executed by a computer, cause the computer to carry out the methods as described herein. The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

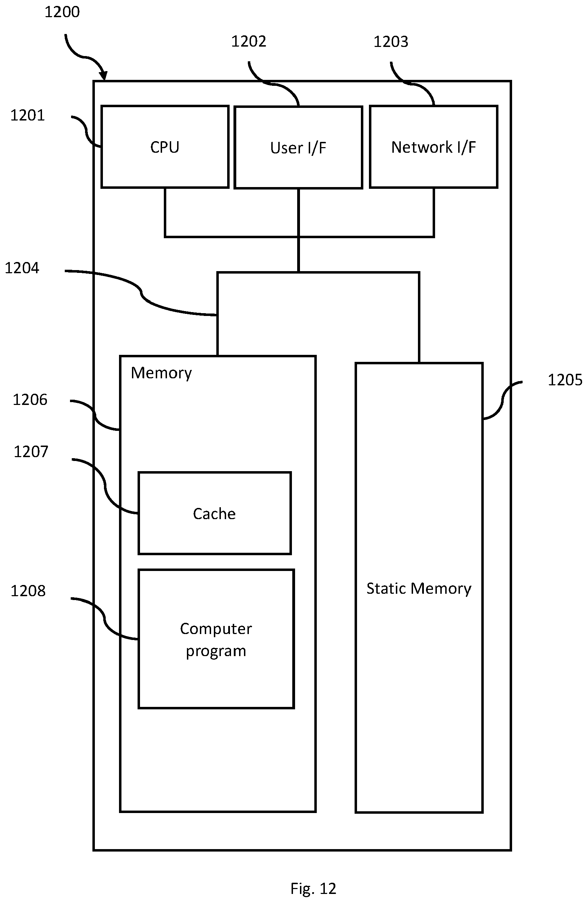

Fig. 12 is a diagrammatic representation of an exemplary computing machine 1200 implementing at least part of the method described herein. Similar computing machines may also realize one or more of the disruption handling system 101 (or at least some components/modules/databases of the disruption handling system 101), the live data components 102, the action components 103, and other parts of the environment 100 as described above. The computing machine 1200 includes a set of instructions to cause the computing machine 1200 to perform any of the methodologies discussed herein when executed by the computing machine 1200.

The computing machine 1200 includes at least one processor 1201, a main memory 1206 and a network interface device 1203 which communicate with each other via a bus 1204. Optionally, the computing machine 1200 may further include a static memory 1205 and a disk-drive unit. A video display, an alpha-numeric input device and a cursor control device may be provided as examples of user interface 1202. The network interface device 1203 connects the computing machine 1200 to any of the other components described above.

Computing machine 1200 includes a memory 1206 such as main memory, random access memory (RAM) and/or any further volatile memory. The memory 1206 may store temporary data and program data to facilitate the functionality database system 100. The memory 106 may also comprise one or more caches 1207 storing data recently retrieved from the databases 101, 102. The caches may be level 1 (L1), level 2 (L2), and/or level 3 (L3) caches. The memory 1206 may also store computer program data 1208 to implement the methods as described above.

A set of computer-executable instructions (computer program code 1208) embodying any one, or all, of the methodologies described herein, resides completely, or at least partially, in or on a machine-readable storage medium, e.g., the memory 1206. The instructions 1208 may further be transmitted or received as a propagated signal via the Internet through the network interface device 1203 or via the user interface 1202. Communication within computing machine is performed via a bus 1204. Basic operation of the computing machine 1200 is controlled by an operating system which is also located in the memory 1206, the at least one processor 1201 and/or the static memory 1205.

It should be appreciated that while particular embodiments and variations of the invention have been described herein, further modifications and alternatives will be apparent to persons skilled in the relevant arts. In particular, the examples are offered by way of illustrating the principles of the invention, and to provide a number of specific methods and arrangements for putting those principles into effect.

Accordingly, the described embodiments should be understood as being provided by way of example, for the purpose of teaching the general features and principles of the invention, but should not be understood as limiting the scope of the invention, which is as defined in the appended claims.

## Claims

1. Computing system of disruption handling in an environment, the system comprising:
an environment data database;
an action data database;
a data processing module configured to receive live data from the environment, to process the live data, and to store the processed live data in the environment data database;
an operating indicator module configured to calculate a current operating indicator from the live data stored in the environment data database;
a prediction engine configured to forecast a development of the operating indicator without interaction based on historical data stored in the environment data database;
an alerting module configured to create real-time alerts in response to determining a deviation of the current operating indicator and/or the forecasted operating indicator caused by a disruption in the environment;
a simulation engine configured to simulate a development of the operating indicator for at least one action based on historical data stored in the environment data database and action data stored in the action data database;
a recommendation engine configured to determine at least one possible action based on the at least one simulated operating indicator, the forecasted operating indicator and/or the current operating indictor;
an action triggering module configured to trigger an action selected from the determined at least one possible action; and
an action reporting module configured to generate action data in response to a triggered action and to store the action data in the action data database.

2. System according to claim 1 further comprising a user interface configured to visualize at least one of the current operating indicator, the forecasted development of the operating indicator, the at least one simulated development of the operating indicator, and the real-time alerts and to display the determined at least one possible action and at least one selectable button for the determined at least one possible action, and wherein the action triggering module is further configured to receive the selected action from the user interface in response to a selection of the respective selectable button.

3. System according to claims 1 or 2, wherein the recommendation engine is further configured to select an action from the determined at least one possible action based on the simulated operating indicator and wherein the action triggering module is further configured to receive the selected action from the recommendation engine.

4. System according to any one of claims 1 to 3 further comprising a rule database configured to store deviation scenario indicators, wherein the alerting module is configured to determine the deviation by comparing the current operating indicator and/or the forecasted operating indicator with at least one of the deviation scenario indicators.

5. System according to any one of claims 1 to 4, wherein the action triggering module is further configured to trigger the selected action on an external computing platform through a dedicated interface.

6. System according to any one of claims 1 to 5, wherein the data processing module is further configured to differentiate normal operation trends of the historical data from trends of the historical data resulting from actions and create a link of the historical data with the respective action data.

7. System according to any one of claims 1 to 6, handling a plurality of operating indicators, wherein the prediction engine is configured to determine a dependency between a first operating indicator and a second operating indicator for forecasting and/or simulating the development of the first operating indicator and/or the second operating indicator.

8. Computerized method of disruption handling in an environment comprising:
receiving live data from the environment;
processing the live data;
storing the processed live data in an environment data database;
calculating a current operating indicator from the live data stored in the environment data database;
forecasting a development of the operating indicator based on historical data stored in the environment data database;
creating real-time alerts in response to determining a deviation caused by a deviation of the current operating indicator and/or the forecasted operating indicator caused by a disruption in the environment;
simulating a development of the operating indicator for at least one action based on historical data stored in the environment data database and action data stored in an action data database;
determining at least one possible action based on the at least one simulated operating indicator, the forecasted operating indicator and/or the current operating indictor triggering an action selected from the determined at least one possible action;
generating action data in response to a triggered action; and
storing the action data in the action data database.

9. Method according to claim 8 further comprising:
visualizing, at a user interface, at least one of the current operating indicator, the forecasted development of the operating indicator, the at least one simulated development of the operating indicator, and the real-time alerts,
displaying the determined at least one possible action and at least one selectable button for the determined at least one possible action; and
receiving the selected action from the user interface in response to a selection of the respective selectable button.

10. Method according to claims 8 or 9 further comprising:
selecting an action from the determined at least one possible action based on the simulated operating indicator.

11. Method according to any one of claims 8 to 10 further comprising:
storing deviation scenario indicators in a rule database; and
determining the deviation by comparing the current operating indicator and/or the forecasted operating indicator with at least one of the deviation scenario indicators.

12. Method according to any one of claims 8 to 11 further comprising:
triggering the selected action on an external computing platform through a dedicated interface.

13. Method according to any one of claims 8 to 12 further comprising:
differentiating normal operation trends resulting without interaction of the historical data from trends of the historical data resulting from actions for simulating or
forecasting the development.

14. Method according to any one of claims 8 to 13 handling a plurality of operating indicators further comprising:
determining a dependency between a first operating indicator and a second operating indicator for forecasting and/or simulating the development of the first operating indicator and/or second operating indicator.

15. A computer program comprising instructions which, when the program is executed by a computer, cause the computer to carry out the method according to any one of claims 8 to 14.
